# EUROPEAN PATENT APPLICATION

(11) **EP 2 166 608 A1**
(43) Date of publication of application: **24.03.2010**
(21) Application number: 08763902.7
(22) Date of filing: 26.05.2008
(51) Int. Cl.: H01M 8/06, B01D 61/00, H01M 8/04, H01M 8/10

(54) **FUEL CELL SYSTEM**

(30) Priority: 18.06.2007 JP 2007159797
(71) Applicant: Panasonic Corporation, Kadoma-shi Osaka 571-8501 (JP)
(72) Inventor: Katsumi Kozu c/o Panasonic Corporation, Osaka 540-6207 (JP); Fukuda shinsuke c/o Panasonic Corporation, Osaka 540-6207 (JP)
(74) Representative: Schwabe - Sandmair - Marx
(86) International application number: PCT/JP2008/001302
(87) International publication number: WO 2008/155875

(57) **Abstract**

A fuel cell system includes a power-generating stack; a fuel feeder for supplying fuel to an anode of the power-generating stack; an air feeder for supplying air to a cathode of the power-generating stack; and an gas-liquid separator for separating water from a gas-liquid mixture. The gas-liquid mixture includes water and water vapor produced at the cathode and gas passing through the cathode. The gas-liquid separator includes a water retainer. This water retainer holds water and water vapor, which is produced at the cathode, in the gas-liquid mixture.

## Description

### TECHNICAL FIELD

The present invention relates to fuel cell systems that discharge a gas-liquid mixture of water and water vapor produced at a cathode and gas passing through the cathode, and efficiently supply air to the cathode.

### BACKGROUND ART

Mobile fuel cell systems including fuel cells for mobile electronic devices and fuel cells for electric vehicles have been increasingly proposed, in addition to stationary fuel cell systems, typically a fuel cell system for cogeneration. For example, as a ubiquitous mobile power source that does not require recharge using an AC adapter, direct-type fuel cells are particularly drawing attention, and they have been actively studied for development.

In direct-type fuel cells, fuel is directly supplied to an anode, and air (oxygen) is directly supplied to the cathode. This causes an oxidation reaction of fuel at the anode, and a reduction reaction of oxygen at the cathode. For example, reaction formulae are as follows in a direct methanol fuel cell (DMFC) that uses methanol as fuel.

Anode reaction formula: CH₃OH + H₂O → CO₂ + 6H⁺ + e⁻ (1)

Cathode reaction formula: 3/2O₂ + 6H⁺ + e⁻ → 3H₂O (2)

In other words, as shown in Formula (1), fuel-mixed liquid including fuel and water is necessary for oxidation reaction at the anode. However, if water is supplied together with fuel from outside of the fuel cell system, a large space is needed for storing both fuel and water. This results in reducing energy density of the fuel cell system. Therefore, in direct-type fuel cells, a recycling fuel cell system is disclosed. In this system, a part of water and water vapor produced at the cathode, based on Reaction Formula (2), is recovered and mixed with the fuel, and then supplied as fuel-mixed liquid. (For example, refer to Patent Literature 1.)

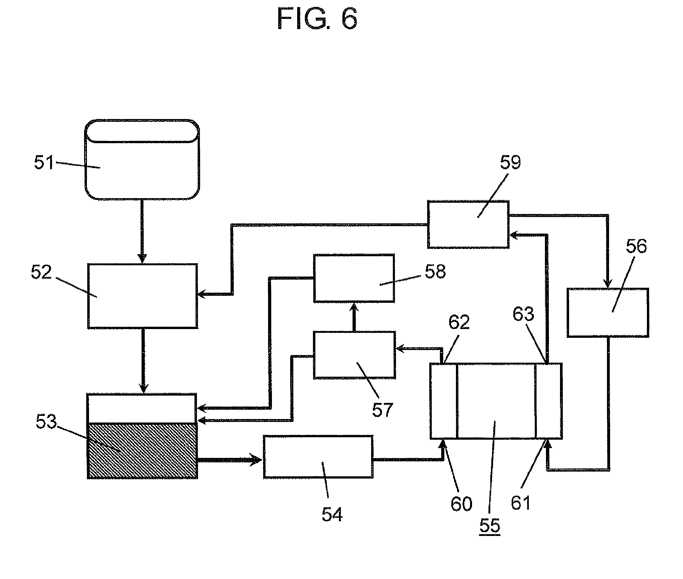

A structure of a general recycling fuel cell system is described below with reference to Fig. 6. Fig. 6 is a diagram of a general structure of a conventional recycling fuel cell system.

As shown in Fig. 6, fuel, such as methanol, is supplied from fuel tank 51 to circulating tank 53 via fuel feeder 52. Fuel is diluted by water, which is recovered using a method described later, and becomes fuel-mixed liquid in fuel feeder 52 or circulating tank 53. Then, fuel pump 54 feeds the fuel-mixed liquid to anode inlet 60 of power-generating stack 55. Unconsumed fuel-mixed liquid and gas-liquid mixture of water vapor, water, and carbon dioxide are discharged from anode outlet 62. Unconsumed fuel-mixed liquid and gas-liquid mixture are led to gas-liquid separator 57, and then the fuel-mixed liquid is returned to circulating tank 53. Gas-liquid mixture of water vapor and water is cooled down to liquid water in heat exchanger 58, and is returned to circulating tank 53.

On the other hand, air for the cathode is supplied by air feeder 56 to cathode inlet 61 of power-generating stack 55. Unconsumed air and water (mainly water vapor) are discharged from cathode outlet 63. A part of water separated and recovered by water recovery unit 59 is returned to fuel feeder 52, and remaining water and air are returned to air feeder 56.

In the fuel cell system disclosed in Patent Literature 1, however, a cooling device, such as heat exchanger 58, is needed for efficiently converting water vapor to water. This makes downsizing of the system difficult. In addition, how water recovery unit 59 separates air and water is not specifically described. Still more, since gases, such as air and carbon dioxide, need to be emitted from gas-liquid separator 57 and water recovery unit 59 at the same time, recovered water may leak from a gas emission point in a mobile device in which the fuel cell system is not fixed. Furthermore, if the fuel cell system is installed in a mobile device, in particular, recovered water may flow back to the cathode, and block the air flow, depending on how the system is installed. This hinders generation or electricity.
Patent Literature 1: Japanese Patent Unexamined Publication No. 2004-349267

### SUMMARY OF THE INVENTION

A fuel cell system of the present invention includes a power-generating stack, a fuel feeder for supplying fuel to an anode of the power-generating stack, an air feeder for supplying air to a cathode of the power-generating stack, and a gas-liquid separator for separating water from a gas-liquid mixture of water and water vapor produced at the cathode and gas passing through the cathode. A water retainer is provided in the gas-liquid separator so as to hold water and water vapor, which is produced at the cathode, in the gas-liquid mixture.

This structure offers a highly-reliable fuel cell system that prevents leakage regardless or the installation position of a fuel cell.

### BRIEF DESCRIPTION OF DRAWINGS

Fig. 1A is a diagram of a fuel cell system in accordance with a first exemplary embodiment or the present invention.
Fig. is is a sectional view illustrating details of a gas-liquid separator in Fig. 1A.
Fig. 2 is a sectional view or another structure of the gas-liquid separator in Fig. 1A.
Fig. 3A is a diagram of a fuel cell system in accordance with a second exemplary embodiment of the present invention.
Fig. 3B is a sectional view illustrating details of a gas-liquid separator in Fig. 3A.
Fig. 4 is a diagram of another structure of the fuel cell system in accordance with the second exemplary embodiment of the present invention.
Fig. 5A is a diagram of a fuel cell system in accordance with a third exemplary embodiment of the present invention.
Fig. 5B is a sectional view illustrating details of an integrated gas-liquid separator in Fig. 5A.
Fig. 6 is a diagram of a general structure of a conventional recycling fuel cell system.

### DETAILED DESCRIPTION OF PREFERRED EMBODIMENTS

Exemplary embodiments of the present invention are described below with reference to drawings. Same reference marks are given to same components. The invention may be practiced or embodied in still other ways without departing from the spirit or essential character thereof.

### (FIRST EXEMPLARY EMBODIMENT)

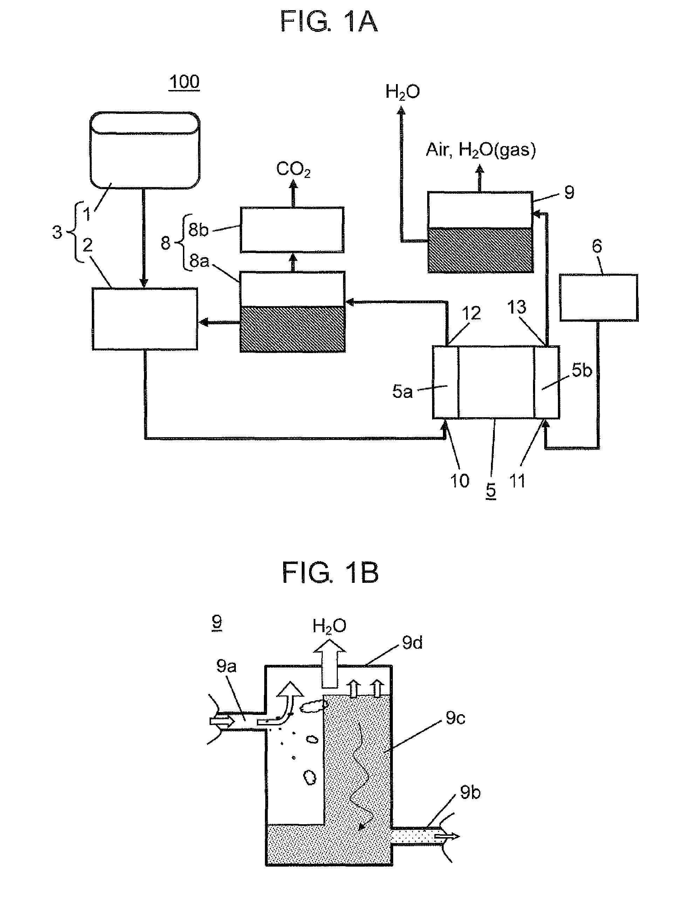

Fig. 1A is a diagram of a fuel cell system in the first exemplary embodiment of the present invention. Fig. 1B is a sectional view illustrating details of gas-liquid separator 9 in Fig. 1A.

As shown in Fig. 1A, fuel cell system 100 includes power-generating stack 5 having anode 5a and cathode 5b; fuel feeder 3 for supplying fuel to anode 5a; air feeder 6, such as an air pump, for supplying air to cathode 5b; collector 8 for collecting a gas-liquid mixture discharged from anode 5a; and gas-liquid separator 9 for separating and collecting a gas-liquid mixture discharged from cathode 5b. Fuel feeder 3 includes fuel tank 1 storing fuel, such as methanol; and fuel pump 2 for supplying fuel from fuel tank 1 to anode inlet 10 of anode 5a in power-generating stack 5. Collector 8 includes liquid recovery unit 8a and gas-liquid separation membrane 8b. Gas-liquid separation membrane 8b separates water, a small amount of fuel (methanol), and carbon dioxide, which are discharged from anode outlet 12 as a result of reaction at anode 5a in power-generating stack 5; and emits at least carbon dioxide outside. At this point, if methanol and water in fuel tank 1 are not mixed at an optimal percentage for power-generating stack 5, for example, liquid in liquid recovery unit 8a of collector 8 is circulated to fuel pump 2. The liquid is mixed with fuel at the optimal percentage in fuel pump 2, for example, and supplied to anode 5a. If the fuel in fuel tank 1 is already mixed at the optimal percentage for supply, the liquid in liquid recovery unit 8a of collector 8 does not need to be circulated. The system may have a structure to recover and dispose of the liquid.

Air feeder 6 including the air pump supplies air to cathode inlet 11 of power-generating stack 5, and reaction in accordance with Cathode Reaction Formula (2) takes place at cathode 5b as follows.

Cathode Reaction Formula: 3/2O₂ + 6H⁺ + e⁻ → 3H₂O (2)

Then, a gas-liquid mixture discharged from cathode outlet 13, which mainly includes water vapor, air, and a small amount of water (liquid), is led to gas-liquid separator 9. The gas-liquid mixture is separated to at least water and gas, such as air, and they are discharged, respectively. If the fuel cell system is used in a mobile device, which is not fixed for installation, the fuel cell system may have a structure to collect discharged water to a collecting tank (not illustrated) for disposal. If the fuel cell system is used in a stationary device, fuel cell system 100 may have a structure to discharge water from the bottom. Furthermore, as discussed later, fuel cell system 100 may have a structure to connect gas-liquid separator 9 to fuel pump 2 in fuel feeder 3 or liquid recovery unit 8a in collector 8, so as to supply water.

Gas-liquid separator 9, which is a key point of this exemplary embodiment of the present invention, is detailed below with reference to Fig. 1B.

As shown in Fig. 1B, gas-liquid separator 9 includes inlet 9a for receiving the gas-liquid mixture mainly including water vapor, air, and a small amount of water (liquid) discharged from the cathode; outlet 9b for discharging typically water; and water retainer 9c for catching water vapor and water received through inlet 9a, typically by liquefaction. In addition, opening 9d, for example, with a reticulated structure is provided at one part of gas-liquid separator 9. This opening 9d discharges water vapor and air that are not collected. Water retainer 9c is made of a material with high water absorbability, such as porous ceramic and fibrous felt, so as to catch and retain water vapor and water. Water that cannot be held by water retainer 9c is discharged from outlet 9b.

In Fig. 1B, opening 9d is provided in a vertically upward direction of gas-liquid separator 9, but the direction may differ, depending on the purpose of use and installation position of the fuel cell system. For example, opening 9d may be provided on the side face of gas-liquid separator 9.

In this exemplary embodiment, the water retainer is used for absorbing and holding water vapor. Therefore, no heat exchanger is needed. As a result, fuel cell system 100 can be downsized. Since water does not flow back from gas-liquid separator 9 to cathode outlet 13, the flow of air is not blocked. Steady reaction at the cathode achieves a highly-reliable fuel cell system. In addition, since the water retainer absorbs and holds water vapor, the gas-liquid separator can be installed at any position, unlike the case, in particular, of collecting water dripped by gravity. Accordingly, the fuel cell system can be easily thinned, for example, by providing the gas-liquid separator on the same plane as the power-generating stack.

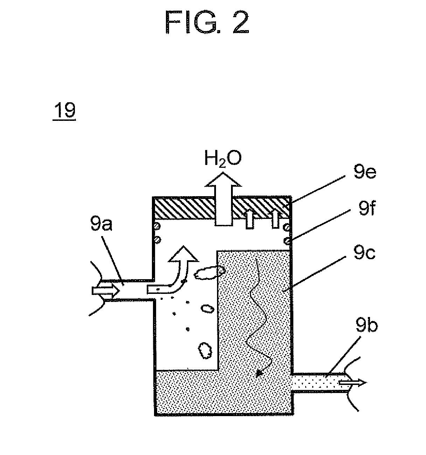

Next is described another example of the structure of the gas-liquid separator in the first exemplary embodiment of the present invention with reference to Fig. 2.

Fig. 2 is a sectional view of gas-liquid separator 19, which is another example of gas-liquid separator 9 in Fig. 1A.

As shown in Fig. 2, gas-liquid separator 1.9 further includes gas-liquid separation membrane 9e. This is different from gas-liquid separator 9 in Fig. 1B.

More specifically, as shown in Fig. 2, gas-liquid separation membrane 9e prevents leakage of dew condensation liquid 9f, which is a portion of water vapor entering through inlet 9a and building up on a side face of gas-liquid separator 19 in an area other than water retainer 9c. This increases the flexibility in a position to install the fuel cell system, and component layout.

Gas-liquid separation membrane 9e builds up condensation of water vapor, and thus water vapor emitted outside through gas-liquid separation membrane 9e can be drastically reduced. By preventing dew condensation of emitted water vapor outside of the system, the reliability of equipment or a device employing the fuel cell system can be remarkably improved.

Gas-liquid separation membrane 9e is a porous sheet made of fluororesin such as polytetrafluoroethylene (PTFE), tetrafluoroethylene-perfluoroalkyl vinyl ether copolymer (PFA), and tetrafluoroethylene-hexafluoropropylene copolymer (FEP); or cloth, paper or nonwoven sheet of fluororesin-coated carbon fiber.

The exemplary embodiment realizes fuel cell system 100 that can further reduce leakage of water or liquid and emissions of water vapor by providing the gas-liquid separation membrane to the gas-liquid separator.

### (SECOND EXEMPLARY EMBODIMENT)

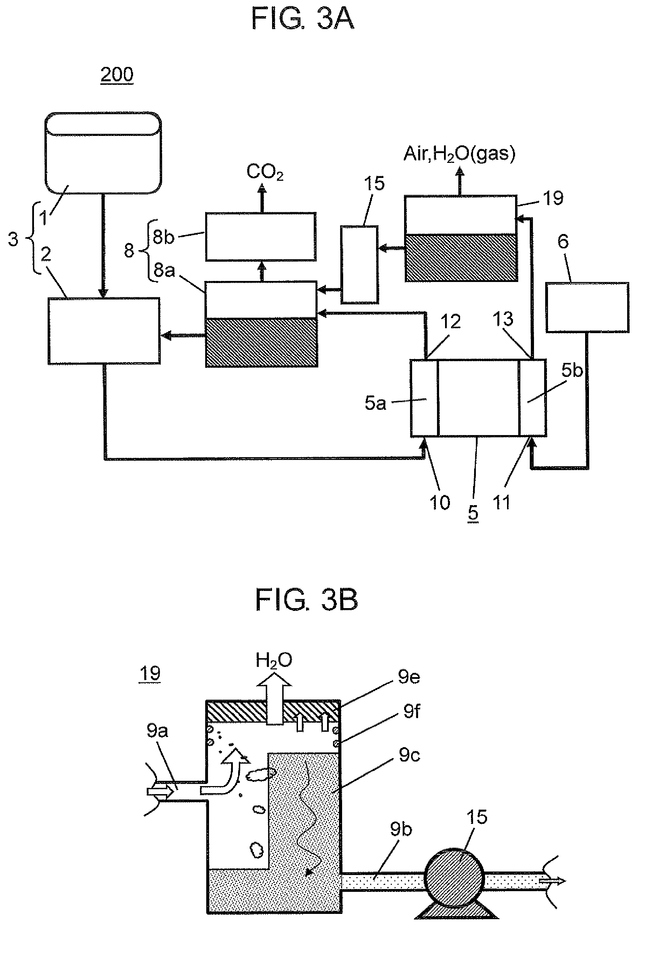

Fig. 3A is a diagram of fuel cell system 200 in the second exemplary embodiment of the present invention. Fig. 3B is a sectional view illustrating details of a gas-liquid separator in Fig. 3A. Components same as those in Fig. 1A are given the same reference marks in the description. Gas-liquid separator 19 in the first exemplary embodiment is used in the description.

As shown in Fig. 3A, fuel cell system 200 includes power-generating stack 5 having anode 5a and cathode 5b; fuel feeder 3 for supplying fuel to anode 5a; air feeder 6, such as an air pump, for supplying air to cathode 5b; collector 8 for collecting a gas-liquid mixture discharged from anode 5a; and gas-liquid separator 19 for separating and collecting a gas-liquid mixture discharged from cathode 5b. Fuel feeder 3 includes fuel tank 1 for storing fuel, such as methanol; and fuel pump 2 for supplying the fuel from fuel tank 1 to anode inlet 10 of anode 5a in power-generating stack 5. Collector 8 includes liquid recovery unit 8a and gas-liquid separation membrane 8b. Gas-liquid separation membrane 8b separates water, a small amount of fuel (methanol), and carbon dioxide discharged from anode outlet 12 as a result of reaction at anode 5a in power-generating stack 5, and emits at least carbon dioxide outside. At this point, if methanol and water, for example, in fuel tank 1 are not mixed at an optimal percentage for power-generating stack 5, liquid in liquid recovery unit 8a of collector 8 is circulated to fuel pump 2. The liquid is mixed with fuel at the optimal percentage in fuel pump 2, for example, and supplied to anode 5a. If the fuel in fuel tank 1 is already mixed at the optimal percentage for supply, the liquid in liquid recovery unit 8a of collector 8 does not have to be circulated. The system may have a structure to recover and dispose of the liquid.

Air feeder 6, such as the air pump, supplies air to cathode inlet 11 of power-generating stack 5, and reaction takes place at cathode 5b in accordance with Reaction Formula (2). Then, the gas-liquid mixture discharged from cathode outlet 13, which mainly includes water vapor, air, and a small amount of water (liquid), is led to gas-liquid separator 19. The gas-liquid mixture is separated to at least water and gas, such as air.

As shown in Fig. 3B, gas-liquid separator 19 includes inlet 9a for receiving the gas-liquid mixture mainly including water vapor, air, and a small amount of water (liquid) discharged from the cathode; outlet 9b for discharging typically water; and water retainer 9c for catching water vapor and water received through inlet 9a. In addition, gas-liquid separation membrane 9e is provided in one part of gas-liquid separator 19 for catching water vapor not caught by water retainer 9c so as to separate air for emission.

Next is described fuel cell system 200 including a discharge pump, which is a key point of this exemplary embodiment of the present invention, with reference to Figs 3A and 3B.

More specifically, as shown in Figs. 3A and 3B, outlet 9b of gas-liquid separator 19 and liquid recovery unit 8a in collector 8 are connected via discharge pump 15. Water held by water retainer 9c of gas-liquid separator 19 is supplied to liquid recovery unit 8a as required. Discharge pump 15 is, for example, a diaphragm pump using a piezoelectric substance or static power.

This exemplary embodiment establishes a closed system for fuel and water in the fuel cell system. This prevents liquid leakage, and achieves a fuel cell system with high flexibility in design without restrictions in installation position or arrangement. In addition, even if all the amount of liquid cannot be held by the water retainer in the gas-liquid separator, the discharge pump forcibly transfers remaining liquid to the liquid collector. This further prevents degradation in the power-generating performance due to backflow of the liquid in the gas-liquid separator to the cathode.

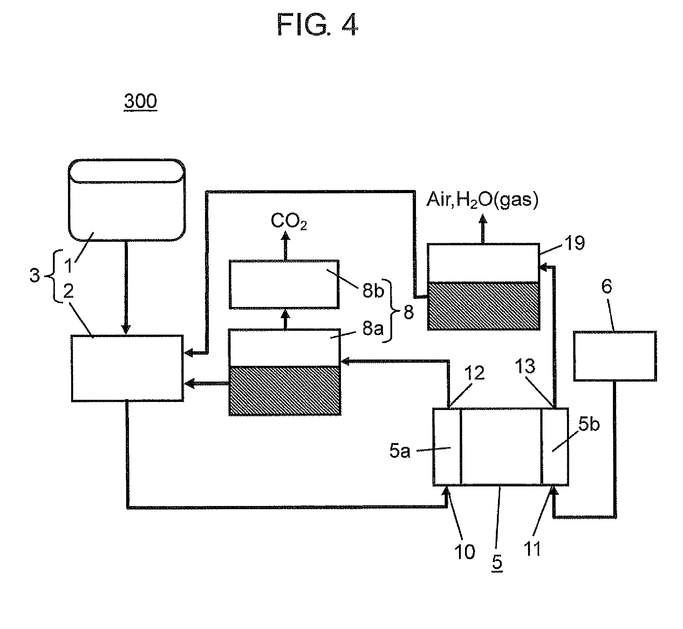

Another structure of the fuel cell system in the second exemplary embodiment of the present invention is described with reference to Fig. 4.

As shown in Fig. 4, gas-liquid separator 19 and fuel pump 2 in fuel feeder 3 are connected, and water held in gas-liquid separator 19 is drawn out by fuel pump 2. This point is different from Figs. 3A and 3B. In other words, fuel pump 2 in fuel feeder 3 is also used as discharge pump 15 in Fig. 3A.

This exemplary embodiment achieves the same effects as above, and eliminates the need of a separate discharge pump. Accordingly, further smaller and thinner fuel cell system 300 is achievable.

### (THIRD EXEMPLARY EMBODIMENT)

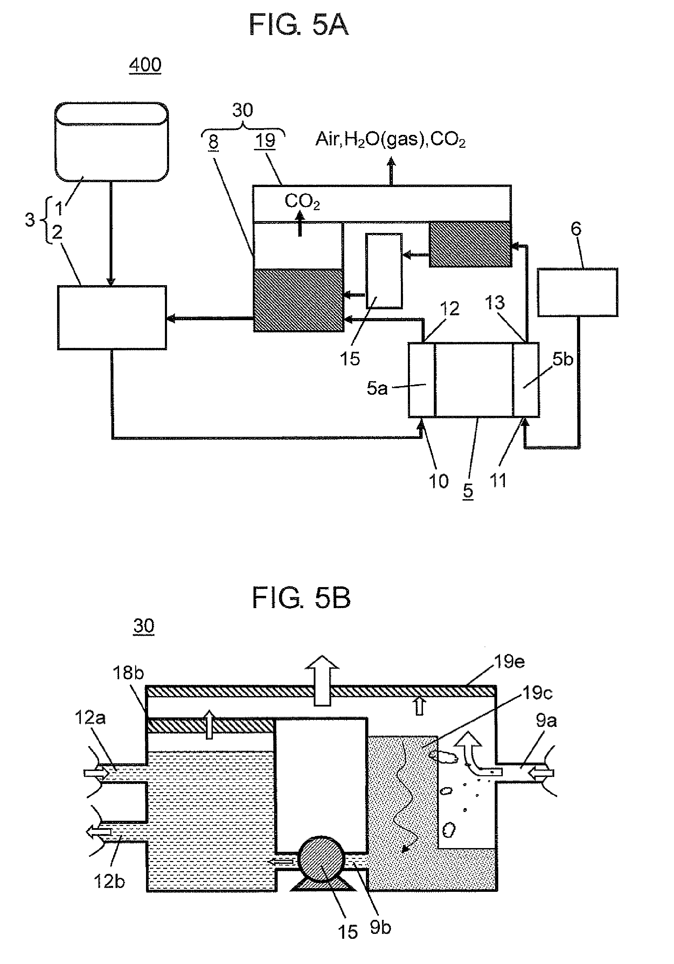

Fig. 5A is a diagram of fuel cell system 400 in the third exemplary embodiment of the present invention. Fig. 5B is a sectional view illustrating details of an integrated gas-liquid separator in Fig. 5A. Components same as those in Fig. 1A are given the same reference marks in the description. The integrated gas-liquid separator is a structure that integrates a collector for separating gas and liquid discharged from an anode and a gas-liquid separator for separating gas and liquid discharged from a cathode.

As shown in Fig. 5A, fuel cell system 400 includes power-generating stack 5 having anode 5a and cathode 5b; fuel feeder 3 for supplying fuel to anode 5a; air feeder 6, such as an air pump, for supplying air to cathode 5b; and integrated gas-liquid separator 30. Integrated gas-liquid separator 30 includes collector 8 for collecting a gas-liquid mixture discharged from anode 5a and gas-liquid separator 19 for separating and collecting a gas-liquid mixture discharged from cathode 5b. Fuel feeder 3 includes fuel tank 1 for storing fuel, such as methanol, and fuel pump 2 for supplying fuel from fuel tank 1 to anode inlet 10 of anode 5a in power-generating stack 5.

Air feeder 6 including the air pump supplies air to cathode inlet 11 of power-generating stack 5, and reaction takes place at cathode 5b in accordance with Reaction Formula (2). Then, integrated gas-liquid separator 30 receives the gas-liquid mixture, which mainly includes water vapor, air, and a small amount of water (liquid), discharged from cathode outlet 13.

Integrated gas-liquid separator 30, which is a key point of this exemplary embodiment of the present invention, is described below with reference to Fig. 5B.

As shown in Fig. 5B, integrated gas-liquid separator 30 includes collector 8 with at least liquid collector 8a and second gas-liquid separation membrane 18b, and gas-liquid separator 19 with at least water retainer 9c and first gas-liquid separation membrane 19e. Collector 8 and gas-liquid separator 19 are connected via second gas-liquid separation membrane 18b of collector 8. In addition, collector 8 is connected to outlet 9b of gas-liquid separator 19 via discharge pump 15 so as to supply liquid held by water retainer 9c of gas-liquid separator 19 to liquid recovery unit 8a of collector 8.

In integrated gas-liquid separator 30, collector 8 receives water, a small amount of fuel (methanol), and carbon dioxide discharged from anode outlet 12, as a result of reaction at anode 5a in power-generating stack 8, through inlet 12. Liquid recovery unit 8a recovers water and a small amount of fuel, and supplies them to fuel pump 2 through outlet 12b as required. At the same time, second gas-liquid separation membrane 18b of collector 8 separates carbon dioxide, and feeds it to gas-liquid separator 19.

Gas-liquid separator 19 receives the gas-liquid mixture, which mainly includes water vapor, air, and a small amount of water (liquid) discharged from cathode outlet 13. Water retainer 9c separates the gas-liquid mixture to at least water and gas, such as air. Liquid separated and held by water retainer 9c is supplied to liquid recovery unit 8a via outlet 9b and discharge pump 15. At the same time, gas, such as air, is emitted outside via first gas-liquid separation membrane 19e. In other words, first gas-liquid separation membrane 19e and second gas-liquid separation membrane 18b doubly-prevent leakage of a large amount of liquid held by liquid recovery unit 8a of collector 8.

A porous sheet made of fluororesin such as polytetrapluoroethylene (PTFE), tetrafluoroethylene-perfluoroalkyl vinyl ether copolymer (PFA), and tetrafluoroethylene-hexafluoropropylene copolymer (FEP); or a cloth, paper, or nonwoven fabric sheet made of fluororesin-coated carbon fiber may be used for first gas-liquid separation membrane 19e and second gas-liquid separation membrane 18b.

An area of the first gas-liquid separation membrane is preferably larger than an area of the second gas-liquid separation membrane. This enables supply of air from the air feeder using a small pressure, resulting in efficient emissions of gases outside. In addition, pressure due to carbon dioxide emitted from the fuel pump at high pressure can be dispersed, so as to reduce the pressure. This prevents backflow from inlet 9a of gas-liquid separator 19.

Still more, air permeability of the first gas-liquid separation membrane is preferably higher than air permeability of the second gas-liquid separation membrane. More specifically, permeability of the second gas-liquid separation membrane is preferably 12 sec/100 ml or below, and the permeability of the first gas-liquid separation membrane is preferably 10 sec/100 ml or below, based on measurement using the Gurley test method specified in JIS P 8117. This enables reliable prevention of leakage of liquid from liquid recovery unit 8a of collector 8.

This exemplary embodiment reliably prevents liquid leakage from the collector, where a large amount of liquid is collected, by providing a double-structure of the first gas-liquid separation membrane and the second gas-liquid separation membrane. Accordingly, a highly-reliable fuel cell system is achievable.

It is preferable to add water repellency to the gas-liquid separation membrane. More specifically, in order to suppress permeation property of liquid while increasing permeation property of gas, a porous film sheet of fluororesin such as polytetrafluoroethylene (PTFE), tetrafluoroethylene-perfluoroalkyl vinyl ether copolymer (PFA), and tetrafluoroethylene-hexafluoropropylene copolymer (FEP); or a cloth, paper or nonwoven sheet made of carbon fiber coated with one of these fluororesin materials are suitable for the gas-liquid separation membrane:

### INDUSTRIAL APPLICABILITY

The fuel cell system of the present invention directly uses fuel, such as methanol and methylether, without hydrogen reforming, and is efficiently applicable as power source to small mobile electronic devices including mobile phones, personal data assistants (PDA), notebook PCs, and camcorders that may be used in any installation position.

### PREFERENCE MARKS IN THE DRAWINGS

- 1,51: Fuel tank
- 2,54: Fuel pump
- 3: Fuel feeder
- 5, 55: Power-generating stack
- 5a: Anode
- 5b: Cathode
- 6: Air feeder
- 8: Collector
- 8a: Liquid recovery unit
- 8b, 9e: Gas-liquid separation membrane
- 9, 19: Gas-liquid separator
- 9a, 12a: Inlet
- 9b, 12b: Outlet
- 9c: Water retainer
- 9d: Opening
- 9f: Dew condensation liquid
- 10, 60: Anode inlet
- 11, 61: Cathode inlet
- 12, 62: Anode outlet
- 13, 63: Cathode outlet
- 15: Discharge pump
- 18b: Second gas-liquid separation membrane
- 19e: First gas-liquid separation membrane
- 30: Integrated gas-liquid separator
- 52: Fuel feeder
- 53: Circulating tank
- 56: Air feeder
- 57: Gas-liquid separator
- 58: Heat exchanger
- 59: Water recovery unit
- 100, 200, 300, 400: Fuel cell system

## Claims

1. A fuel cell system comprising:
a power-generating stack;
a fuel feeder for supplying fuel to an anode of the power-generating stack;
an air feeder for supplying air to a cathode of the power-generating stack; and
a gas-liquid separator for separating water from a gas-liquid mixture, the gas-liquid mixture including water and water vapor produced at the cathode and gas passing through the cathode;
wherein
the gas-liquid separator includes a water retainer for holding water and water vapor in the gas-liquid mixture, the water and the water vapor being produced at the cathode.

2. The fuel cell system of claim 1, wherein the gas-liquid separator further includes a gas-liquid separation membrane for separating the water and the water vapor from the gas, and emitting the gas.

3. The fuel cell system of one of claims 1, wherein a collector is provided at an outlet side of the anode of the power-generating stack, the collector collecting a gas-liquid mixture produced at the anode of the power-generating stack, the collector including a gas-liquid separation membrane for separating gas and liquid from the gas-liquid mixture; the liquid being supplied to the fuel feeder.

4. The fuel cell system of claim 1, wherein the gas-liquid separator is connected to the fuel feeder so as to supply the water and the water vapor held by the water retainer to the fuel feeder.

5. The fuel cell system of claim 1, wherein a discharge pump is provided in the gas-liquid separator, the discharge pump discharging the water and the water vapor held by the water retainer.

6. The fuel cell system of claim 3, wherein a discharge pump is provided in the gas-liquid separator, and the discharging pump is connected to the collector so as to supply the water and the water vapor held by the water retainer.

7. The fuel cell system of claim 3, wherein the gas-liquid separation membrane of the gas-liquid separator is a first gas-liquid separation membrane, and the gas-liquid separation membrane of the collector is a second gas-liquid separation membrane, the gas-liquid separator and the collector being connected via the second gas-liquid separation membrane, gas generated in the collector and gas generated in the gas-liquid separator being emitted via the first gas-liquid separation membrane.

8. The fuel cell system of claim 7, wherein an area of the first gas-liquid separation membrane is larger than an area of the second gas-liquid separation membrane.

9. The fuel cell system of one of claims 7 and 8, wherein permeability of the first gas-liquid separation membrane is higher than permeability of the second gas-liquid separation membrane.
